# EUROPÄISCHE PATENTANMELDUNG

(11) **EP 1 722 112 A2**
(43) Veröffentlichungstag der Anmeldung: **15.11.2006**
(21) Anmeldenummer: 06007028.1
(22) Anmeldetag: 03.04.2006
(51) Int. Cl.: F16B 12/52

(54) **Leichtbau-Verbindungsvorrichtung**

(30) Priorität: 28.04.2005 DE 102005019878
(71) Anmelder: VS Vereinigte Spezialmöbelfabriken GmbH & Co., 97941 Tauberbischofsheim (DE)
(72) Erfinder: Korte, Friedrich, 32429 Minden (DE); Beil, Frank, 97947 Grünsfeld (DE); Weber, Reinhard, 32425 Minden (DE)
(74) Vertreter: Söltenfuss, Dirk Christian

(57) **Zusammenfassung**

Es wird eine Verbindungsvorrichtung (20) zum Befestigen eines Hohlprofilelements vorgeschlagen, mit einem Profilkörper (22) und einem Fortsatz (28), der mit dem Profilkörper verbunden ist und dessen Außendurchmesser im Wesentlichen dem Innendurchmesser des Hohlprofilelements entspricht, wobei der Profilkörper (22) und der Fortsatz (28) aus einem leichten Material gemacht sind und der Fortsatz (28) als Hohlprofil ausgebildet ist. Erfindungsgemäß enthält eine Wandung des vorzugsweise als Hohlprofil ausgebildeten Fortsatzes (28) eine vorgefertigte hülsenartige Armierungsform (46) zur Erzielung einer hohen Formstabilität trotz Leichtbauweise. Eine solche Verbindungsvorrichtung (20) ist zum Beispiel zum Verbinden eines Tischbeins (16) mit wenigstens einer Zarge (14) eines Tisches (10) einsetzbar.

## Beschreibung

Die vorliegende Erfindung betrifft eine Leichtbau-Verbindungsvorrichtung gemäß dem Oberbegriff des Anspruchs 1 oder 2, und insbesondere eine solche Verbindungsvorrichtung zum Verbinden eines Tischbeins mit wenigstens einer Zarge eines Tisches, um ein leichtes und zugleich formstabiles Tischmöbel zu realisieren.

Üblicherweise sind bei einem Tischmöbel mit einer Tischplatte, vier im rechten Winkel zueinander angeordneten Zargen zum Tragen der Tischplatte und vier Tischbeinen, die jeweils in den Eckbereichen der Tischplatte zwischen zwei angrenzenden Zargen angeordnet sind, die Zargen miteinander und die Tischbeine mit den Zargen verschweißt oder verschraubt. Bei einem sehr leichten Tischmöbel stellt sich hierbei das Problem der Formstabilität, falls zum Beispiel für die Zargen und die Tischbeine Hohlprofile aus Aluminium verwendet werden. Insbesondere beim Verschieben und Umlegen auf die Seite treten an den Tischbeinen hohe Verformungs- und Verwindungskräfte auf, die leicht zu einer Beschädigung des Tischmöbels führen können.

In diesem Zusammenhang ist ferner aus der DE 92 14 088 U1 ein Tischmöbel mit einer Tischplatte und lösbar daran angesetzten Tischbeinen bekannt. Die Tischbeine weisen hierbei waagrecht abstehende erste Kupplungselemente (z.B. in Form von zwei parallelen Flachbändern) auf, und die Tischplatte weist unter ihrer Arbeitsfläche zweite Kupplungselemente (z.B. in Rohrform) auf, die zu den ersten Kupplungselementen komplementär sind, wobei die Kupplungselemente derart ineinander geführt sind, dass die Tischbeine in wählbaren waagrechten Abständen zum Rand der Tischplatte feststellbar sind. Je nach Material der Tischbeine und der Kupplungselemente fehlt es auch diesem Tischmöbel jedoch an einer ausreichend hohen Formstabilität der Verbindung zwischen Tischplatte und Tischbeinen.

Die DE 93 18 920 U1 offenbart einen Tischfuß, der ohne Verwendung der obigen Zargen direkt und relativ formstabil mit der Unterseite der Tischplatte verbindbar ist.

Eine formstabile Eckverbindung für Tischmöbel beschreibt die DE 298 21 904 U1, bei welcher das Fußrohr an seinem der Tischplatte zugewandten freien ende in der Rohrwandung zwei Schlitze zur Aufnahme der Trageprofile für die Tischplatte aufweist, wobei die Trageprofile im Bereich des freien Endes des Fußrohrs mittels eines massiven Formteils aus Metall im Fußrohr miteinander fest verbunden sind. Diese Konstruktion ist aufgrund der Verwendung des massiven Formteils für Leichtbau-Anwendungen nicht geeignet.

Der vorliegenden Erfindung liegt somit die Aufgabe zugrunde, eine sehr formstabile Verbindungsvorrichtung für Leichtbau-Anwendungen bereitzustellen.

Diese Aufgabe wird durch eine Verbindungsvorrichtung mit den Merkmalen des Anspruchs 1 bzw. 2 gelöst. Vorteilhafte Ausgestaltungen und Weiterbildungen der Erfindung sind Gegenstand der abhängigen Ansprüche.

Gemäß einem ersten Aspekt der Erfindung weist die Verbindungsvorrichtung, die dem Befestigen eines Hohlprofilelements dient, einen Profilkörper und einen Fortsatz, der mit dem Profilkörper verbunden ist und dessen Außendurchmesser im Wesentlichen dem Innendurchmesser des Hohlprofilelements entspricht, auf, wobei der Profilkörper und der Fortsatz aus einem leichten Material gemacht sind und der Fortsatz vorzugsweise als Hohlprofil ausgebildet ist. Außerdem enthält eine Wandung des als Hohlprofil ausgebildeten Fortsatzes eine vorgefertigte hülsenartige Armierungsform.

Gemäß einem zweiten Aspekt der Erfindung weist die Verbindungsvorrichtung, die dem Befestigen eines Profilelements dient, einen Profilkörper und einen als Hohlprofil ausgebildeten Fortsatz, der mit dem Profilkörper verbunden ist und dessen Innendurchmesser im Wesentlichen dem Außendurchmesser des Profilelements entspricht, auf, wobei der Profilkörper und der Fortsatz aus einem leichten Material gemacht sind. Außerdem enthält eine Wandung des als Hohlprofil ausgebildeten Fortsatzes eine vorgefertigte hülsenartige Armierungsform.

Der Fortsatz und das Hohlprofilelement bzw. Profilelement werden ineinander eingesetzt und mittels Presspassung befestigt. Obwohl die Verbindungsvorrichtung aus einem leichten Material gemacht ist, kann aufgrund der in der Wandung des Fortsatzes integrierten vorgefertigten hülsenartigen Armierungsform trotz Leichtbauweise eine sehr hohe Formstabilität gegen Verformungs- und Verwindungskräfte im Bereich dieser Verbindung erzielt werden. Die erfindungsgemäße Konstruktion weist auch gegenüber anderen herkömmlichen Verstärkungsmethoden, wie beispielsweise als Fasern oder Füllkörper in den Werkstoff der Verbindungsvorrichtung eingebrachte Armierungen oder eine separat angefügte Stahlhülse, Vorteile hinsichtlich der Formstabilität und des geringen Gewichts der Verbindungsvorrichtung auf. Aufgrund dieser oben beschriebenen erfindungsgemäßen Konstruktion der Verbindungsvorrichtung kann die Verbindungsvorrichtung vorteilhafterweise im Wesentlichen aus einem leichten Material hoher Formstabilität gebildet sein.

In einer Ausgestaltung der Erfindung weist die Verbindungsvorrichtung wenigstens einen weiteren Fortsatz auf, der entsprechend dem Fortsatz des obigen ersten Aspekts oder zweiten Aspekts aufgebaut und verstärkt ist, so dass weitere Hohlprofilelemente oder Profilelemente an die Verbindungsvorrichtung angeschlossen werden kann.

Die Armierungsform ist vorzugsweise gitterartig, netzartig, geflechtartig oder dergleichen ausgebildet, sodass die Armierungsform einen guten Verbund mit dem Material der Wandung des Fortsatzes bzw. weiteren Fortsatzes bildet. Dabei kann die Armierungsform insbesondere in der Wandung des Fortsatzes bzw. des weiteren Fortsatzes umgossen oder umspritzt sein.

Die Armierungsform ist beispielsweise aus Stahl oder einem anderen hochfesten Metall gefertigt.

Vorzugsweise ist die Verbindungsvorrichtung als ein Leichtmetall-Druckgussteil oder ein Kunststoff-Spritzgussteil gefertigt.

In einer weiteren Ausgestaltung der Erfindung sind der Profilkörper und der Fortsatz bzw. der Profilkörper, der Fortsatz und der weitere Fortsatz der Verbindungsvorrichtung integral ausgebildet.

Im Fall mehrerer Fortsätze an der Verbindungsvorrichtung sind diese bevorzugt im Wesentlichen senkrecht zueinander ausgebildet.

Um das Ineinanderschieben der Fortsätze und der Hohlprofilelemente / Profilelemente zu erleichtern, ist das distale Ende des Fortsatzes bzw. des weiteren Fortsatzes vorzugsweise konisch verjüngend ausgebildet.

Die obige Verbindungsvorrichtung der Erfindung ist in vorteilhafter Weise zum Verbinden eines Tischbeins mit wenigstens einer Zarge eines Tisches geeignet.

Obige sowie weitere Merkmale und Vorteile der Erfindung werden aus der nachfolgenden Beschreibung eines bevorzugten, aber nicht einschränkenden Ausführungsbeispiels unter Bezugnahme auf die beiliegenden Zeichnungen besser verständlich. Darin zeigen:
- Fig. 1: eine schematische Seitenansicht eines Tischmöbels gemäß der vorliegenden Erfindung;
- Fig. 2: eine Darstellung des in Fig. 1 dargestellten Tischmöbels von unten;
- Fig. 3: eine schematische Darstellung einer Verbindungsvorrichtung gemäß einem bevorzugten Ausführungsbeispiel der vorliegenden Erfindung in Draufsicht;
- Fig. 4: eine schematische Seitenansicht der Verbindungsvorrichtung von Fig. 3 gemäß Ansicht IV in Fig. 3;
- Fig. 5: eine Schnittansicht des Profilkörpers 22 gemäß Schnitt V-V in Fig. 4;
- Fig. 6: eine schematische Seitenansicht des Fortsatzes 26 der Verbindungsvorrichtung von Fig. 3 gemäß Ansicht VI in Fig. 3; und
- Fig. 7: schematische Darstellungen zur Erläuterung der Herstellung und des Aufbaus der erfindungsgemäßen Verbindungsvorrichtung.

Unter Bezugnahme auf die beiliegenden Zeichnungen wird nun ein bevorzugtes Ausführungsbeispiel einer Verbindungsvorrichtung für ein Tischmöbel beschrieben, ohne dass die vorliegende Erfindung auf diese spezielle Anwendung einer solchen Verbindungsvorrichtung beschränkt wäre. Aufgrund der erfindungsgemäßen Verbindungsvorrichtung ist das Tischmöbel in Leichtbauweise und gleichzeitig mit einer hohen Formstabilität herstellbar und daher vorteilhafterweise insbesondere als Kinder- oder Schülertisch einsetzbar, ohne auf diese Anwendung beschränkt zu sein.

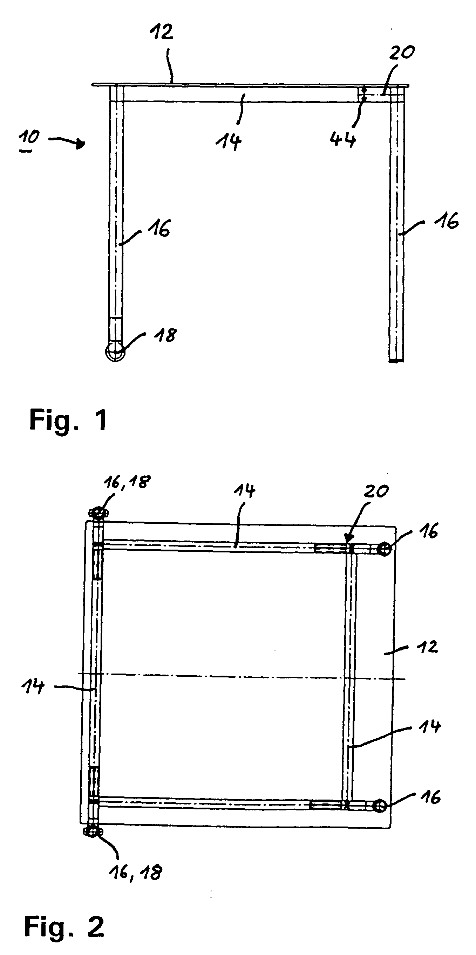

Wie in Fig. 1 und 2 zu erkennen, ist das Tischmöbel 10 aus einer Tischplatte 12 zum Beispiel aus Holz, vier im rechten Winkel zueinander angeordneten Zargen oder Streben 14 zum Tragen der Tischplatte 12, und vier Tischbeinen 16 in den Eckbereichen der Tischplatte 12 zwischen zwei angrenzenden Zargen 14 aufgebaut. Ein Tischbein 16 und zwei angrenzende Zargen 14 sind jeweils mittels einer Verbindungsvorrichtung 20 miteinander verbunden, die nachfolgend im Detail beschrieben wird. Die Tischplatte ist zum Beispiel auf die Zargen 14 aufgeklebt oder mit diesen verschraubt.

Während die Zargen 14 vorzugsweise einen rechteckigen Profilkörper besitzen, können die Tischbeine 16 einen rechteckigen oder auch einen runden Profilkörper haben. Um den Einsatz der erfindungsgemäßen Verbindungsvorrichtung 20 zu ermöglichen, sind die Zargen 14 und die Tischbeine 16 zumindest im Bereich angrenzend an die Verbindungsvorrichtung 20 als Hohlprofil ausgebildet. Zur weiteren Gewichtsreduzierung können die Zargen 14 und die Tischbeine 16 aber auch komplett als Hohlprofil ausgebildet sein.

In einer besonderen Ausführungsform der Erfindung sind zwei benachbarte Tischbeine 16 an einander abgewandten Seiten des Tischmöbels 10 außerhalb der Tischplatte 12 angeordnet, wie insbesondere in Fig. 2 zu erkennen. Zum leichteren Verschieben des Tischmöbels 10 können diese Tischbeine 16 vorzugsweise mit Rollen 18 oder dergleichen versehen sein. Aufgrund der in Fig. 2 veranschaulichten Anordnung der Tischbeine 16 unter der Tischplatte 12 ist es möglich, mehrere Tischmöbel 10 in sehr kompakter Weise übereinander zu stapeln. Trotz der seitlich über die Tischplatte 12 vorstehenden Tischbeine 16 ist es problemlos möglich, einen geschlossenen Tischplattenverbund aus mehreren Tischmöbeln 10 aufzubauen.

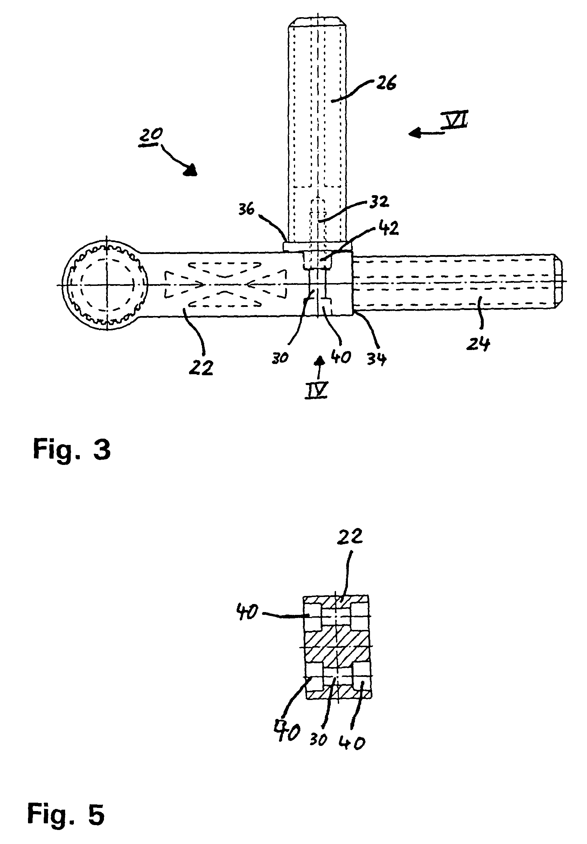

Es folgt nun eine detaillierte Beschreibung des Aufbaus einer Verbindungsvorrichtung gemäß einem bevorzugten Ausführungsbeispiel der vorliegenden Erfindung unter Bezugnahme auf Fig. 3 bis 7.

Eine Verbindungsvorrichtung 20 soll ein Tischbein 16 und zwei angrenzende Zargen 14 des Tischmöbels 10 miteinander verbinden. Um eine Leichtbauweise des Tischmöbels 10 zu ermöglichen, soll die Verbindungsvorrichtung 20 bei geringem eigenen Gewicht gleichzeitig eine hohe Formstabilität des Tischmöbels 10 insbesondere in den Verbindungsbereichen gewährleisten.

Die Verbindungsvorrichtung 20 ist aus einem leichten Material mit einer hohen Formstabilität hergestellt. Die Verbindungsvorrichtung kann zum Beispiel im Druckguss aus einem Leichtmetall wie Aluminium, Magnesium und deren Legierungen oder im Spritzguss aus Kunststoff gefertigt werden.

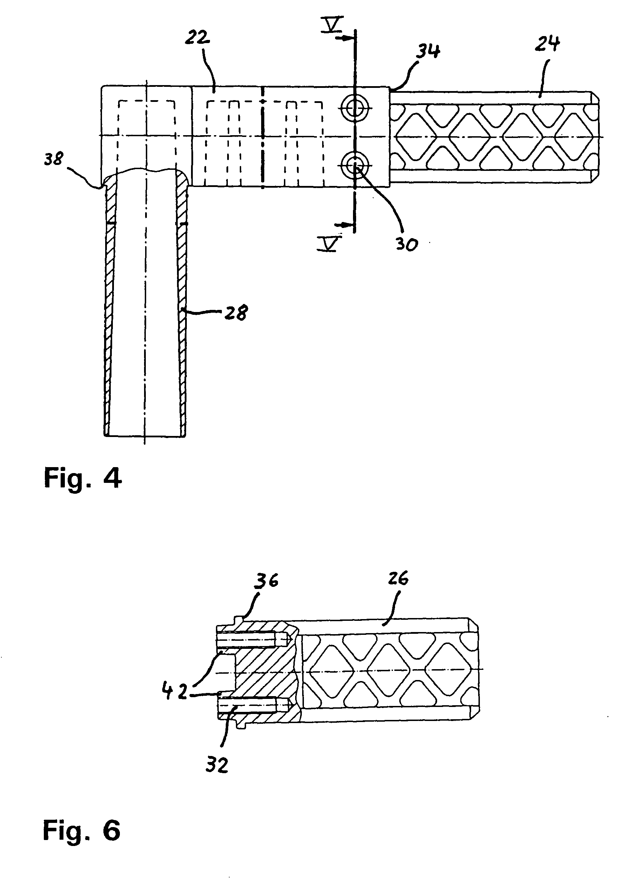

Wie in der Draufsicht von Fig. 3 dargestellt, weist die Verbindungsvorrichtung 20 einen Profilkörper 22 auf, dessen Profil im Wesentlichen dem Profil der Zargen 14 des Tischmöbels 10 entspricht und dessen Hauptachse in der Ebene der angrenzenden Zargen 14 liegt. An diesen Profilkörper 22 schließen sich ein erster Fortsatz 24 zum Anschluss einer ersten Zarge 14, ein zweiter Fortsatz 28 zum Anschluss eines Tischbeins 16 und ein dritter Fortsatz 26 zum Anschluss einer zweiten Zarge 14 an, wie in Fig. 3 und 4 zu sehen ist. Der erste Fortsatz 24 für die erste Zarge 14 und der zweite Fortsatz 28 für das Tischbein 16 sind vorzugsweise integral mit dem Profilkörper 22 ausgebildet, während der dritte Fortsatz 26 für die zweite Zarge 14 aus fertigungstechnischen Gründen bevorzugt als separates Bauteil ausgebildet ist, wahlweise aber ebenfalls integral mit dem Profilkörper 22 ausgebildet sein kann.

Der Fortsatz 28 für das Tischbein 16 ist koaxial zu dem Tischbein 16 angeordnet. Der Außendurchmesser des Fortsatzes 28 entspricht im Wesentlichen dem Innendurchmesser des Hohlprofils des Tischbeins 16, sodass der Fortsatz unter Presspassung fest in das Tischbein eingesetzt werden kann. Zur genauen Positionierung des Tischbeins 16 relativ zu der Verbindungsvorrichtung 20 weist der Profilkörper 22 am Ansatz des dritten Fortsatzes 28 ferner einen entsprechenden Anschlag 38 auf.

Der zweite Fortsatz 28 erstreckt sich ein gewisses Maß in das Tischbein, sodass der gewünschte rechte Winkel zwischen dem Tischbein 16 und den Zargen 14 verstärkt wird. Hierdurch wird eine erhöhte Formstabilität des Tischmöbels 10 erreicht. Die Länge des zweiten Fortsatzes 28 für das Tischbein 16 entspricht dabei etwa 15% bis etwa 40%, bevorzugter etwa 20% bis etwa 30% der Länge eines Tischbeins 16.

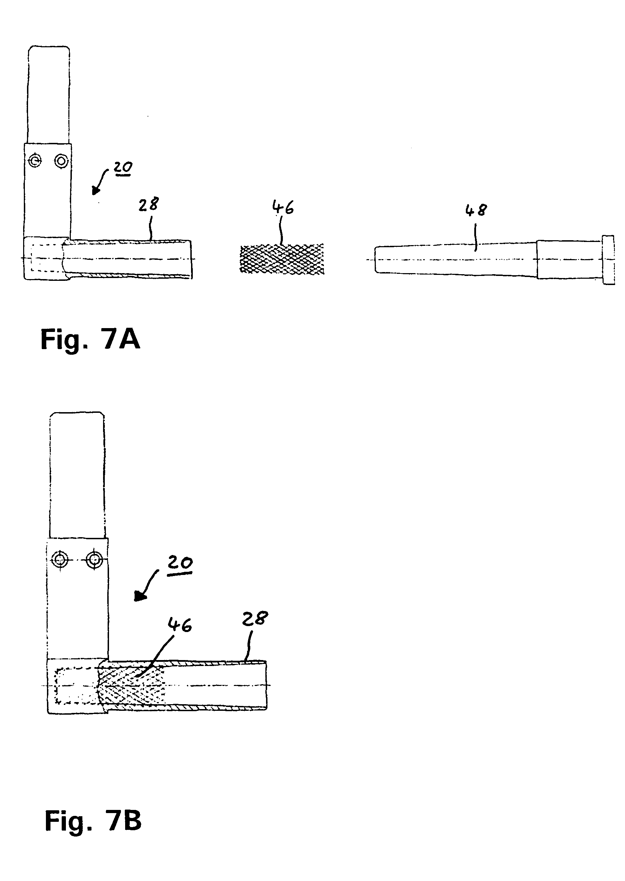

Der Fortsatz 28 für das Tischbein 16, der in Extremfällen die höchste Verformungs- und Verwindungssteifigkeit besitzen muss, ist zur Gewichtsreduzierung bevorzugt als Hohlprofil ausgebildet, in dessen Wandung eine vorgefertigte hülsenartige Armierungsform 46 zur Verstärkung integriert ist, wie weiter unten anhand von Fig. 7 näher erläutert. Durch diese Konstruktion der Verbindungsvorrichtung können vorteilhafterweise sämtliche Komponenten des Tischmöbels 10 in Leichtbauweise ausgeführt werden.

Der integral mit dem Profilkörper 22 ausgebildete erste Fortsatz 24 zum Anschluss einer ersten Zarge 14 ist koaxial zu der Zarge 14 angeordnet. Der Außendurchmesser des Fortsatzes 24 entspricht im Wesentlichen dem Innendurchmesser des Hohlprofils der Zarge 14 und die Außenfläche des ersten Fortsatzes kann zusätzlich profiliert oder gerippt sein, wie in Fig. 4 angedeutet, sodass der Fortsatz unter Presspassung fest in die Zarge 14 eingesetzt werden kann. Zur genauen Positionierung der Zarge 14 relativ zur Verbindungsvorrichtung 20 weist der Profilkörper 22 am Ansatz des ersten Fortsatzes 24 ferner einen entsprechenden Anschlag 34 auf.

Der erste Fortsatz 24 erstreckt sich ebenfalls ein gewisses Maß in die Zarge 14, um die Stabilität der Verbindung zu erhöhen, sodass eine erhöhte Formstabilität des gesamten Tischmöbels 10 erreicht wird. Die Länge des ersten Fortsatzes 24 für die Zarge 14 entspricht dabei etwa 10% bis etwa 40%, bevorzugter etwa 15% bis etwa 25% der Länge einer Zarge 14.

Der dritte Fortsatz 26 zur Anbindung einer zweiten Zarge 14 ist koaxial zu dieser weiteren Zarge 14 ausgerichtet. Außerdem ist der dritte Fortsatz 26 im Wesentlichen senkrecht zu sowohl dem ersten Fortsatz 24 als auch dem zweiten Fortsatz 28 ausgebildet. Der Außendurchmesser des dritten Fortsatzes 26 entspricht im Wesentlichen dem Innendurchmesser des Hohlprofils der Zarge 14 und die Außenfläche des dritten Fortsatzes kann zusätzlich profiliert oder gerippt sein, wie in Fig. 6 angedeutet, sodass der Fortsatz unter Presspassung fest in die weitere Zarge 14 eingesetzt werden kann. Zur genauen Positionierung der weiteren Zarge 14 relativ zur Verbindungsvorrichtung 20 weist der dritte Fortsatz 26 einen umlaufenden Anschlag 36 auf.

Ferner erstreckt sich der dritte Fortsatz 26 analog dem ersten Fortsatz ein gewisses Maß in die weitere Zarge 14. Die Länge des dritten Fortsatzes 26 für die Zarge 14 entspricht dabei etwa 10% bis etwa 40%, bevorzugter etwa 15% bis etwa 25% der Länge einer Zarge 14.

Wie bereits oben erwähnt, ist der dritte Fortsatz 26 bevorzugt als separates Bauteil zu dem Profilkörper 22 ausgebildet und muss daher mit diesem fest verbunden werden. Wie im Schnitt V-V in Fig. 5 dargestellt, weist der Profilkörper 22 hierzu zwei Durchbohrungen 30, auf und der dritte Fortsatz 26 weist stirnseitig zwei Gewindebohrungen 32 auf (siehe Fig. 6), die fluchtend zueinander angeordnet werden und in welche zwei Schrauben 44 eingeschraubt werden.

Zur besseren Verdrehsicherung des dritten Fortsatzes 26 für die weitere Zarge 14 gegenüber dem Profilkörper 22 sind insgesamt zwei Schrauben 44 vorgesehen. Außerdem weist die Stirnseite des dritten Fortsatzes 26 im Bereich der Gewindebohrungen 32 jeweils einen Ansatz 42 auf, der in eine entsprechende Ausnehmung 40 in der Außenwand des Profilkörpers 22 aufgenommen wird. Die Schraubenköpfe werden ebenfalls in derartigen Ausnehmungen 40 des Profilkörpers 22 versenkt.

Um ein leichteres Einsetzen der Fortsätze 34, 26, 28 in die Zargen 14 bzw. Tischbeine 16 zu ermöglichen, sind deren distale Enden vorzugsweise konisch verjüngend ausgebildet.

In Fig. 7A und 7B ist angedeutet, wie die hülsenartige Armierungsform 46 in den als Hohlprofil ausgebildeten Fortsatz 28 der Verbindungsvorrichtung 20 integriert wird. Die hülsenartige Armierungsform 46 ist zum Beispiel eine aus Stahl oder einem anderen hochfesten Metall vorgefertigte Form, die gitterartig, netzartig, geflechtartig oder dergleichen ausgebildet ist.

Diese als separate Hülse vorgefertigte Armierungsform 46 wird zum Beispiel auf einen Kern 48 eines Fertigungswerkzeugs aufgeschoben und in den hohlen Fortsatz 28 eingeschoben. Anschließend wird diese Armierungsform 46 mit dem Material der Verbindungsvorrichtung bei dessen Herstellung integral umspritzt oder umgossen. Aufgrund der gitterartig, netzartig, geflechtartig oder dergleichen ausgebildeten Armierungsform 46 ergibt sich ein ausgezeichneter Verbund zwischen der Armierungsform 46 und der Wandung des Fortsatzes 28.

Das bei extremen Belastungen möglicherweise forminstabile leichte Material der Verbindungsvorrichtung 20 erlangt durch die so integrierte Armierungsform 46 eine ausgezeichnete Formstabilität gegen hohe Verformungs- und Verwindungskräfte. Die so erzielte Formstabilität ist dabei größer als bei einer herkömmlichen Verstärkung in Form von in den Werkstoff der Verbindungsvorrichtung 20 integrierten Armierungsfasern oder -füllstoffen. Außerdem wird im Gegensatz zum einfachen Einsetzen einer Stahlhülse in den hohlen Fortsatz 28 ein besserer Verbund mit der Wandung des Fortsatzes 28 und damit ebenfalls eine höhere Formstabilität erzielt.

Während die vorliegende Erfindung oben anhand eines bevorzugten Ausführungsbeispiels unter Bezugnahme auf die beiliegenden Zeichnungen vollständig beschrieben worden ist, ist es für den Fachmann selbstverständlich, dass verschiedene Änderungen und Modifikationen daran vorgenommen werden können, ohne den durch die anhängenden Ansprüche definierten Schutzumfang zu verlassen.

So ist in dem obigen Ausführungsbeispiel zum Beispiel nur der zweite Fortsatz 28 der Verbindungsvorrichtung 20 für das Tischbein 16 mit einer Armierungsform 46 verstärkt. Selbstverständlich können aber auch die weiteren Fortsätze 24 und 26 für die Zargen 14 in analoger Weise mit einer Armierungsform 46 verstärkt werden.

In dem obigen Ausführungsbeispiel ist der Fortsatz 28 als Hohlprofil ausgebildet, dessen Außendurchmesser im Wesentlichen dem Innendurchmesser eines als Hohlprofil ausgebildeten Tischbeins 16 entspricht, sodass der Fortsatz 28 in das Tischbein 16 eingeschoben und mittels Presspassung verklemmt werden kann. Alternativ ist es ebenfalls möglich, dass der als Hohlprofil ausgebildete Fortsatz 28 einen Innendurchmesser aufweist, der einem Außendurchmesser eine Profilkörpers entspricht, sodass der Profilkörper in den Fortsatz 28 eingeschoben und dort mittels Presspassung befestigt werden kann.

In der bevorzugten Ausführungsform ist der mit der Armierungsform 46 verstärkte Fortsatz 28 als Hohlprofil ausgebildet, es ist aber grundsätzlich auch möglich, den Fortsatz 28 als Vollprofil auszubilden, auch wenn dies in einem höheren Gesamtgewicht der Verbindungsvorrichtung 20 resultiert. In diesem Fall könnte die Armierungsform 46 zum Beispiel auf den Fortsatz 28 aufgeschoben und dann umspritzt bzw. umgossen werden, und das Tischbein 16 würde schließlich auf den so verstärkten Fortsatz 28 aufgeschoben und verklemmt werden.

Ferner ist die erfindungsgemäße Verbindungsvorrichtung 20 nicht nur für Tischmöbel 10 geeignet. Die Verbindungsvorrichtung 20 der Erfindung ist vielmehr immer dann vorteilhaft einsetzbar, wenn trotz erwünschter Leichtbauweise eine hohe Formstabilität gewährleistet werden soll.

### BEZUGSZIFFERNLISTE

- 10: Tisch
- 12: Tischplatte
- 14: Zarge
- 16: Tischbein
- 18: Rolle
- 20: Verbindungsvorrichtung
- 22: Profilkörper
- 24: Fortsatz für erste Zarge
- 26: Fortsatz für zweite Zarge
- 28: Fortsatz für Tischbein
- 30: Durchbohrungen in 22
- 32: Gewindebohrung in 26
- 34: Anschlag für erste Zarge
- 36: Anschlag für zweite Zarge
- 38: Anschlag für Tischbein
- 40: Ausnehmung
- 42: Ansatz
- 44: Schrauben
- 46: Armierungsform
- 48: Kernwerkzeug

## Patentansprüche

1. Verbindungsvorrichtung (20) zum Befestigen eines Hohlprofilelements, mit einem Profilkörper (22); und
einem Fortsatz (28), der mit dem Profilkörper verbunden ist und dessen Außendurchmesser im Wesentlichen dem Innendurchmesser des Hohlprofilelements entspricht,
wobei der Profilkörper (22) und der Fortsatz (28) aus einem leichten Material gemacht sind,
**dadurch gekennzeichnet,**
**dass** eine Wandung des als Hohlprofil ausgebildeten Fortsatzes (28) eine vorgefertigte hülsenartige Armierungsform (46) enthält.

2. Verbindungsvorrichtung (20) zum Befestigen eines Profilelements, mit einem Profilkörper (22); und
einem Fortsatz (28), der mit dem Profilkörper (22) verbunden ist und als Hohlprofil ausgebildet ist, dessen Innendurchmesser im Wesentlichen dem Außendurchmesser des Profilelements entspricht,
wobei der Profilkörper (22) und der Fortsatz (28) aus einem leichten Material gemacht sind,
**dadurch gekennzeichnet,**
**dass** eine Wandung des als Hohlprofil ausgebildeten Fortsatzes (28) eine vorgefertigte hülsenartige Armierungsform (46) enthält.

3. Verbindungsvorrichtung nach Anspruch 1 oder 2,
**dadurch gekennzeichnet,**
**dass** wenigstens ein weiterer Fortsatz (24, 26) aus einem leichten Material vorgesehen ist, der mit dem Profilkörper (22) verbunden ist und dessen Außendurchmesser im Wesentlichen dem Innendurchmesser eines weiteren Hohlprofilelements entspricht, und
**dass** eine Wandung des als Hohlprofil ausgebildeten weiteren Fortsatzes (24, 26) eine vorgefertigte hülsenartige Armierungsform (46) enthält.

4. Verbindungsvorrichtung nach Anspruch 1 oder 3,
**dadurch gekennzeichnet,**
**dass** der Fortsatz (28) als Hohlprofil ausgebildet ist.

5. Verbindungsvorrichtung nach Anspruch 1 oder 2,
**dadurch gekennzeichnet,**
**dass** wenigstens ein weiterer Fortsatz (24, 26) aus einem leichten Material vorgesehen ist, der mit dem Profilkörper (22) verbunden ist, der als Hohlprofil ausgebildet ist und dessen Innendurchmesser im Wesentlichen dem Außendurchmesser eines weiteren Hohlprofilelements entspricht, und
**dass** eine Wandung des als Hohlprofil ausgebildeten weiteren Fortsatzes (24, 26) eine vorgefertigte hülsenartige Armierungsform (46) enthält.

6. Verbindungsvorrichtung nach einem der vorherigen Ansprüche,
**dadurch gekennzeichnet,**
**dass** die Armierungsform (46) gitterartig, netzartig, geflechtartig oder dergleichen ausgebildet ist.

7. Verbindungsvorrichtung nach Anspruch 6,
**dadurch gekennzeichnet,**
**dass** die Armierungsform (46) in der Wandung des Fortsatzes (28) bzw. des weiteren Fortsatzes (24, 26) umgossen oder umspritzt ist.

8. Verbindungsvorrichtung nach einem der vorherigen Ansprüche,
**dadurch gekennzeichnet,**
**dass** die Armierungsform (46) aus Stahl oder einem anderen hochfesten Metall gefertigt ist.

9. Verbindungsvorrichtung nach einem der vorherigen Ansprüche,
**dadurch gekennzeichnet,**
**dass** die Verbindungsvorrichtung (20) als ein Leichtmetall-Druckgussteil oder ein Kunststoff-Spritzgussteil gefertigt ist.

10. Verbindungsvorrichtung nach einem der vorherigen Ansprüche,
**dadurch gekennzeichnet,**
**dass** der Profilkörper (22) und der Fortsatz (28) bzw. der Profilkörper (22), der Fortsatz (28) und der weitere Fortsatz (24, 26) der Verbindungsvorrichtung (20) integral ausgebildet sind.

11. Verbindungsvorrichtung nach einem der Ansprüche 3 bis 10,
**dadurch gekennzeichnet,**
**dass** der wenigstens eine weitere Fortsatz (24, 26) im Wesentlichen senkrecht zu dem Fortsatz (28) ausgebildet ist.

12. Verbindungsvorrichtung nach einem der vorhergehenden Ansprüche,
**dadurch gekennzeichnet,**
**dass** das distale Ende des Fortsatzes (28) bzw. des weiteren Fortsatzes (24, 26) konisch verjüngend ausgebildet ist.

13. Tischmöbel (10), mit
einer Tischplatte (12);
vier im rechten Winkel zueinander angeordneten Zargen (14) zum Tragen der Tischplatte (12);
vier Tischbeinen (16), die jeweils in den Eckbereichen der Tischplatte (12) zwischen zwei angrenzenden Zargen (14) angeordnet sind; und
vier Verbindungsvorrichtungen (20) nach einem der Ansprüche 1 bis 12, die jeweils ein Tischbein (16) und zwei angrenzende Zargen (14) miteinander verbinden.
